# EUROPEAN PATENT APPLICATION

(11) **EP 1 801 713 A1**
(43) Date of publication of application: **27.06.2007**
(21) Application number: 06026290.4
(22) Date of filing: 19.12.2006
(51) Int. Cl.: G06F 17/30, G06Q 30/00

(54) **System and method for electronic delivery of media**

(30) Priority: 19.12.2005 US 751722 P; 15.12.2006 US 639670 P
(71) Applicant: Stenberg, Are, 0375 Oslo (NO); Petchenikov, Nikolai, 8 Mur Street Sofia 1618 (BG)
(72) Inventor: Stenberg, Are, 0375 Oslo (NO); Petchenikov, Nikolai, 8 Mur Street Sofia 1618 (BG)
(74) Representative: HOFFMANN EITLE

(57) **Abstract**

The present disclosure provides for a system for electronic distribution of media. The system includes media including instructions having contact information and a unique code identifying the media, a computing device configured to transmit an electronic message based on the contact information, the electronic message including the unique code. The system also includes at least one server configured to store an electronic content and to catalogue the electronic content by the unique code. The server further configured to generate an individualized online library and to deliver the electronic content to at least one of the computing device, an e-mail box and the online library.

## Description

### Cross Reference to Related Application

The present application claims the benefit of and priority to U.S. Provisional Application Serial No. 60/751,722 filed on December 19, 2005, the entire disclosure of which is incorporated by reference herein.

### BACKGROUND

### 1. Field

The present disclosure relates generally to data processing and network systems, and more particularly, to a method and system for providing a user with an individual electronic content corresponding to specific media.

### 2. Description of the Related Art

Presently, media access is restricted to its source. Print media (e.g., newspapers, magazines, etc.) typically require people to have a hardcopy thereof. Although electronic media is more accessible and easier to distribute, it may only be accessed by connecting to the source (e.g., server). Typical media distribution methods do not allow users to permanently save a copy of the content for later use. Therefore, many users are unable to keep a permanent copy of media content, which may be stored and shared with other users.

The current solutions to store and share articles from printed media have several weaknesses. Users must store and organize content in paper format, something that requires space and makes the retrieval and sharing of the content cumbersome. Many users are in a situation where they cannot keep the magazine/newspaper or tear out the relevant pages. Magazines often have an average of five to seven users per copy, and logically, not all of them can keep the magazine or the same physical pages.

Regarding electronic media, users can not conveniently obtain an electronic copy of the content. If they have to go on-line to download content or they have to manually scan a printed version of the article, they need to invest significant time and effort. Users can not request, store or share the content instantly as they read it - they have to wait until they are close to a PC, a copy machine or a scanner. Many users do not desire to spend the required time to do this, or they might simply forget to do so.

In order to retain a copy of an article in a magazine or a newspaper the user must photocopy or scan the article, which requires access to special equipment or physically remove the relevant pages. Saving electronic content on ones electronic devices is also complicated for at least two reasons. First, saving certain type of electronic content on the user's electronic devices, such as web pages, results in loss of formatting. Second, certain types of electronic devices (e.g., mobile phones) lack the capacity to perform such tasks due to hardware limitations (e.g., relatively small storage capacity).

Therefore there is a need for a system and method for providing users with an electronic copy of content which may be shareable among other users.

### SUMMARY

A system and method according to the present disclosure provide a solution that enables media providers (e.g., publishers and/or advertisers) to allow users to easily request and obtain content relating to the media in electronic format. Each article includes a unique code that the user can send via a Short Message Service ("SMS") with his/her mobile phone in order to request the electronic content. The request is forwarded to a server which receives this SMS and sends the content in electronic format (e.g., a PDF format, rich-text format, etc.) to both the user's e-mail address and to a personalized online article library. In the same manner, the user can directly send the media-based content to another recipient by adding that recipient's e-mail address or mobile phone number in the SMS.

According to one aspect of the present disclosure, a system for electronic distribution of media is disclosed. The system includes media having instructions, which comprise contact information and a unique code identifying the media. The system also includes a computing device configured to transmit an electronic message based on the contact information, the electronic message including the unique code. The system further includes at least one server configured to store electronic content relating to the media and to catalogue the electronic content by the unique code, the server is further configured to generate an individualized online library and to deliver the electronic content to at least one of the computing device, an e-mail box and the online library.

According to another aspect of the present disclosure, a method for electronic distribution of media is disclosed. The method includes the steps of providing media including instructions having contact information and a unique code identifying the media content. The method also includes the step of cataloguing electronic content relating to the media to assign the unique code thereto. The method further includes the steps of transmitting an electronic message based on the contact information, the electronic message including the unique code; generating an individualized online library, and delivering the electronic content to at least one of the computing device, an e-mail box and the online library.

According to a further aspect of the present disclosure, a system for electronic distribution of media is disclosed. The system includes media having instructions, which comprise having contact information and a unique code identifying the media. The system also includes a computing device configured to transmit an electronic message based on the contact information, the electronic message including the unique code and an e-mail address identifying an e-mail box. The system further includes at least one server configured to store electronic content relating to the media and to catalogue the electronic content by the unique code, the server is further configured to generate an individualized online library and to deliver the electronic content to at least one of the computing device, an e-mail box and the online library.

### BRIEF DESCRIPTION OF THE DRAWINGS

The above and other aspects, features, and advantages of the present disclosure will become more apparent in light of the following detailed description when taken in conjunction with the accompanying drawings in which:
Fig. 1 is a schematic diagram of a system for electronic delivery of media according to the present disclosure; and
Fig. 2 is a flow diagram showing a method for electronic delivery of media according to the present disclosure.

### DETAILED DESCRIPTION

Preferred embodiments of the present disclosure will be described hereinbelow with reference to the accompanying drawings. In the following description, well-known functions or constructions are not described in detail to avoid obscuring the present disclosure in unnecessary detail.

It is to be understood that the present disclosure may be implemented in various forms of hardware, software, firmware, special purpose processors, or a combination thereof. In one embodiment, the present disclosure may be implemented in software as an application program tangibly embodied on a program storage device. The application program may be uploaded to, and executed by, a computer system comprising any suitable architecture such as a personal computer, a workstation or server. Preferably, the system is implemented on a computer platform having hardware such as one or more central processing units (CPU) (e.g., processor), a random access memory (RAM), a read only memory (ROM) and input/output (I/O) interface(s) such as a keyboard, cursor control device (e.g., a mouse or joystick) and display device.

A system bus couples the various components and may be any of several types of bus structures including a memory bus or memory controller, a peripheral bus, and a local bus using any of a variety of bus architectures. The computer platform also includes an operating system and micro instruction code, which may be stored in a data storage device. The various processes and functions described herein may either be part of the micro instruction code or part of the application program (or a combination thereof) which is executed via the operating system. In addition, various other peripheral devices may be connected to the computer platform by various interfaces and bus structures, such as a parallel port, serial port or universal serial bus (USB), for example, additional storage devices or a printer.

It is to be further understood that because some of the constituent system components and method steps depicted in the accompanying figures may be implemented in software, the actual connections between the system components (or the process steps) may differ depending upon the manner in which the present disclosure is programmed. Given the teachings of the present disclosure provided herein, one of ordinary skill in the related art will be able to contemplate these and similar implementations or configurations of the present disclosure.

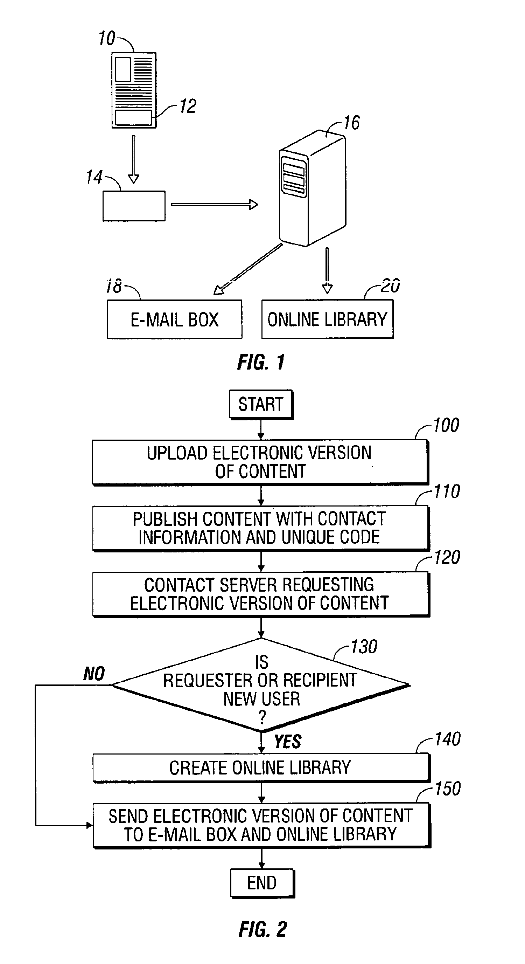

Fig. 1 shows a system according to the present disclosure which allows users to request and receive media electronically. Providers (e.g., publishers) distribute media 10, such as printed articles (e.g., magazines, newspapers, brochures, etc.), billboards and/or electronic media (e.g., websites). The media 10 includes instructions 12 which provide guidance to users on how to obtain electronic content relating to the media 10. The electronic content may include, but is not limited to, an electronic document version of the media 10 (e.g., PDF, rich-text, HTML, ASCII text, etc.), on-demand rich media presentations (e.g., webcasts, podcasts, streaming audio and/or video, etc.) as well as supplemental electronic content, such as advertisements, additional product information and/or coupons in response to user requests.

In particular, the instructions 12 include contact information for the entity responsible for electronically distributing the media 10 and a unique code associated with and identifying the media 10. The contact information may be a phone number, an e-mail address, SMS number, etc. In addition, first-time users of the service are instructed to provide an e-mail address for an e-mail box 18 or an e-mail address for another recipient. As described in more detail below, electronic content as well as additional instructions for accessing an individualized online library 20 are delivered to the e-mail box 18.

Users desiring electronic content relating to the media 10 send an electronic message (e.g., SMS, e-mail, etc.) to the specified contact information with the unique code referencing the media 10 in order to request the electronic content. This is accomplished using a computing device 14 (e.g., cellular phone, PDA, personal computer, etc.). First-time users of the service specify their e-mail address in the SMS message together with the code referencing media 10. The computing device 14 is configured to access the e-mail box 18 to retrieve e-messages as well as to perform a variety of other tasks, e.g., web-browsing for accessing the online library 20.

The request is sent to a server 16 which processes the request by retrieving the article and forwarding the article to the user. The request may be sent over a wide variety of networks, such as a local area network (LAN), wide area network (WAN), the Internet, cellular, WiFi, wireless broadband, and/or any known network that couples a plurality of computing devices to enable various modes of communication via network messages. Those skilled in the art will appreciate that a plurality of servers may be utilized.

The server 16 includes a plurality of electronic content (e.g., electronic versions of the media 10, coupons, advertisements, etc.) which are uploaded by providers. The server 16 catalogues the electronic content by assigning a unique code to each file thereby cross-referencing the electronic content with the media 10. The unique codes may be stored is a database (not explicitly shown).

The server is also configured to create an individualized online library 20 if the user or the recipient is a first-time user. This event is triggered by the user sending a message from a mobile phone to the server. The server 16 hosts the online library 20 as a web page which can be accessed by the user through any computer having access to the World Wide Web.

Furthermore, the server 16 forwards the electronic content directly to the user's e-mail box 18, based on the e-mail address provided by the user. Users who have used the service before automatically get the articles delivered to their already registered e-mail addresses. First-time users also automatically receive an e-mail or an SMS from the server 16 containing instructions with the log-in details for the online library 20.

A user can share articles with another recipient by including the recipient's e-mail address or phone number in the SMS request message. In response to the request, the server 16 creates a personalized online library for the recipient containing the requested content. The server 16 also sends the recipient an SMS and/or e-mail message informing the recipient of the article and with log-in details for his/her personalized library.

Fig. 2 illustrates the method for delivery of electronic media. In step 100, providers upload electronic content. The server 16 catalogues the media-based content by assigning a unique code to content which references corresponding media 10. In step 110, provider of media 10 publishes the media 10 and includes the instructions 12 providing users with contact information and unique code identifying the media 10. In step 120, user contacts the server 16 requesting the electronic content based on the contact information and unique code included in the instructions 12. The user may include an email address, if the user or the recipient of the media 10 are first-time users.

In step 130, the server 16 determines whether the email address, if any, is a new e-email address not associated with a corresponding online library 20. This may be the case where the requester or the recipient is the first-time user of the service. If the e-mail address does not have an online library 20, in step 140, the server creates an online library and replies to the request with instructions on how to access the online library 20. In step 150, the server 16 sends the electronic content to the computing device 14 and to the online library 20 where the requester or the recipient may access the media 10 at a later time.

The system and method according to present disclosure provide publishers of newspapers and magazines with a new channel to easily distribute their content. Publishers will also obtain highly valuable data about which articles are requested. This data can help them develop their editorial focus. Moreover, publishers can charge a fee for the articles, and the users may pay this conveniently through their phone bill.

The main innovations and advantages of present disclosure are: convenience of being able to obtain an article in electronic format just by sending an SMS, immediate delivery of an electronic copy of the article, and access to a personalized online library containing all requested articles.

The main customers for this innovation are envisioned to be publishers of printed media such as magazines and newspapers. The solution is very suitable for a broad range of content types, such as business and science articles, do-it-yourself articles, nutrition tips, cooking recipes, advertisements, coupon distribution, etc.

While the disclosure has been shown and described with reference to certain preferred embodiments thereof, it will be understood by those skilled in the art that various changes in form and detail may be made therein without departing from the spirit and scope of the disclosure.

## Claims

1. A system for electronic distribution of media comprising:
media including instructions having contact information and a unique code identifying the media;
a computing device configured to transmit an electronic message based on the contact information, the electronic message including the unique code; and
at least one server configured to store electronic content corresponding to the media and to catalogue the electronic content by the unique code, the server is further configured to generate an individualized online library and to deliver the electronic content to at least one of the computing device, an e-mail box and the online library.

2. A system according to claim 1, wherein the electronic content is selected from the group consisting of an electronic version of the media, an on-demand rich media presentation, and supplemental electronic content.

3. A system according to claim 5, wherein the supplemental electronic content is selected from the group consisting of an advertisement and a coupon.

4. A system according to claim 1, wherein the electronic message further includes an e-mail address identifying the e-mail box.

5. A system according to claim 1, wherein the server is further configured to generate the individualized online library based on the determination whether the electronic message is generated by a first-time user.

6. A system according to claim 1, wherein the server is further configured to generate the individualized online library based on the determination whether recipient of the electronic content of the article is a first-time user.

7. A system according to claim 1, wherein the online library is a web page accessible via the World Wide Web.

8. A method for electronic distribution of media, comprising the steps of:
providing media including instructions having contact information and a unique code identifying the media;
cataloguing electronic content corresponding to the media to assign the unique code thereto;
transmitting an electronic message based on the contact information, the electronic message including the unique code;
generating an individualized online library; and
delivering the electronic content to at least one of the computing device, an e-mail box and the online library.

9. A method according to claim 8, wherein the step of transmitting further includes the step of transmitting the electronic message including an e-mail address identifying the e-mail box.

10. A method according to claim 8, further comprising the step of:
determining the electronic message is generated by a first-time user.

11. A method according to claim 8, further comprising the step of:
determining whether recipient of the electronic content of the article is a first-time user.

12. A method according to claim 8, further comprising the step of:
hosting the online library as a web page.

13. A method according to claim 8, wherein the electronic content is selected from the group consisting of an electronic version of the media, an on-demand rich media presentation, an advertisement and a coupon.

14. A system for electronic distribution of media comprising:
media including instructions having contact information and a unique code identifying the media;
a computing device configured to transmit an electronic message based on the contact information, the electronic message including the unique code and an e-mail address identifying an e-mail box; and
at least one server configured to store an electronic content and to catalogue the electronic content by the unique code, the server is further configured to generate an individualized online library and to deliver the electronic content to at least one of the computing device, an e-mail box and the online library.

15. A system according to claim 14, wherein the e-mail address identifies an e-mail box belonging to a requester.

16. A system according to claim 14, wherein the e-mail address identifies an e-mail box belonging to another recipient.

17. A system according to claim 14, wherein the online library is a web page accessible via the World Wide Web.

18. A system according to claim 14, wherein the electronic content is selected from the group consisting of an electronic version of the media, an on-demand rich media presentation, and supplemental electronic content.

19. A system according to claim 14, wherein the supplemental electronic content is selected from the group consisting of an advertisement and a coupon.

20. A system according to claim 15, wherein the supplemental electronic content is selected from the group consisting of an advertisement and a coupon.
